# EUROPEAN PATENT APPLICATION

(11) **EP 4 722 540 A1**
(43) Date of publication of application: **08.04.2026**
(21) Application number: 23929923.3
(22) Date of filing: 01.11.2023
(51) Int. Cl.: F04D 13/06, F04D 29/10, B01D 36/02, F16K 11/083, F16K 27/06, F16K 51/00, B01D 35/02

(54) **WATER PUMP STRUCTURE OF SAND FILTER, WATERWAY PIPE FILTER INTEGRATED BODY, SAND PUMP, AND MULTI-WAY CONTROL VALVE**

(30) Priority: 29.03.2023 CN 202320662355 U; 29.03.2023 CN 202320655391 U; 29.03.2023 CN 202320655425 U; 29.03.2023 CN 202310321325
(71) Applicant: Guangxi Stermay Industrial Limited, Wuzhou, Guangxi 543000 (CN)
(72) Inventor: LIU, Ying'an, Wuzhou, Guangxi 543000 (CN)
(74) Representative: Nordic Patent Service A/S
(86) International application number: PCT/CN2023/129134
(87) International publication number: WO 2024/198353

(57) **Abstract**

A water pump structure of a sand filter, a waterway pipe filter integrated body, a sand pump, and a multi-way control valve. The water pump structure comprises a support (1), a pump body (2) installed on the support (1), and a motor (3) installed on the support (1). An output shaft (31) of the motor (3) passes through a shaft hole of the support (1) to be connected to the pump body (2), and a water throwing ring is installed on the output shaft (31) of the motor (3). A water blocking groove (11) is formed on the support (1). The water throwing ring is located in the water blocking groove (11), and the shaft hole is formed at the bottom of the water blocking groove (11). A water blocking convex ring (12) surrounding the periphery of the output shaft (31) of the motor (3) is also arranged at the bottom of the water blocking groove (11).

## Description

### TECHNICAL FIELD

The present invention relates to the technical field of sand filters, and in particular, to a water pump structure of a sand filter, a water pipeline filtration assembly, a sand pump, and a multi-way control valve.

### BACKGROUND ART

In the prior art, a sand filter, also called a sand pump or a filter, can be used for filtering water, such as circulating filtration of water in swimming pools. The sand filter usually includes a water pump, a filter cartridge, a valve cover, and a control valve. The water pump is used to deliver pool water to the valve cover and the filter cartridge for filtration. The water pump usually includes two parts, i.e., a pump body and a motor. When the motor is running, it drives the pump body to operate, and water is delivered to the valve cover and the filter cartridge through the pump body. Although the pump body itself has a sealed design, in use, a small amount of water will still leak from the pump body and flow to the motor along a connecting shaft between the motor and the pump body, causing problems such as short circuit or damage to the motor. This further affects the normal operation of the motor and the sand filter, resulting in poor stability of the sand filter, and even resulting in safety accidents in severe cases.

When the sand pump is in operation, the water pump introduces the water flow into the control valve through an external hose assembly. After that, the water flow enters the filter cartridge through the control valve, passes through the filter sand and the filter, then flows back to the control valve through a water pipe, and finally is discharged through a water outlet of the control valve. The external hose assembly includes hoses, pipe joints, sealing rings for the pipe joints, and clamping hoops, etc. Moreover, the interior of an existing sand pump usually adopts the combination of a filter with a large plate mesh structure and a vertical water pipe to achieve filtration and water diversion. This large plate mesh filter is a mesh filtering device designed to be laid flat along a bottom of the filter cartridge, and to meet the filtration requirements, it is necessary to layout a large-area mesh plate structure, which leads to a larger diameter of the filter cartridge and thus a larger volume of the entire sand pump. Moreover, this structure is complex, with larger components, and the assembly process is complicated and difficult, which ultimately results in the sand pump not only being large in size but also high in costs. In addition, the design of external hoses also leads to messy pipeline connections in the appearance of the sand pump, and during use, it is easy for the external hoses to be pulled off, thereby resulting in poor stability of the sand pump in use.

In the prior art, the control valve applied to the sand pump or the sand filter is usually of a handle-type structure, which has an overall complex structure, requires many components, is difficult to assemble, has high manufacturing costs, and has a large overall volume, making it unfavorable for use in occasions with limited space.

### SUMMARY

In view of the shortcomings of the prior art mentioned above, a technical problem to be solved by the present invention is to provide a water pump structure of a sand filter that is able to improve the operational stability and safety of the sand filter.

To achieve the above purpose, the present invention provides a water pump structure of a sand filter. The water pump structure comprises a bracket, a pump body installed on the bracket, and a motor installed on the bracket. An output shaft of the motor passes through a shaft hole of the bracket to be connected to the pump body, and a water slinging ring is installed on the output shaft of the motor. A water-retaining groove is arranged on the bracket, the water slinging ring is located in the water-retaining groove, and the shaft hole is arranged at a bottom of the water-retaining groove. Water-retaining convex ring(s) surrounding a periphery of the output shaft of the motor are further arranged at the bottom of the water-retaining groove.

Further, at least one of the water-retaining convex ring(s) is a semicircular convex ring, and the semicircular convex ring surrounds a periphery of an upper half of the shaft hole.

Further, two water-retaining convex rings exist, one of the two water-retaining convex rings is the semicircular convex ring, and another of the two water-retaining convex rings is an inner circular convex ring, wherein the semicircular convex ring is located outside the inner circular convex ring.

Further, the pump body and the motor are respectively located on two sides of the bracket, and an opening of the water-retaining groove faces the pump body.

Further, a positioning groove in a circle is arranged on the output shaft of the motor, and the water slinging ring is embedded in the positioning groove.

Further, a section of a side wall of the water-retaining groove is of an inclined structure.

Further, the bracket, the pump body, and the motor are all located in an installation cavity formed between a bottom of a filter cartridge and a base. A lower installation groove is arranged on the base, and the installation cavity comprises a cavity in the lower installation groove. Lower positioning grooves are respectively arranged on two side walls of the lower installation groove, and two sides of the bracket are respectively embedded in the two lower positioning grooves.

Further, an upper installation groove is arranged at the bottom of the filter cartridge, and the installation cavity further comprises a cavity in the upper installation groove. Upper positioning grooves are respectively arranged on two side walls of the upper installation groove. Upper ends of the two sides of the bracket are respectively embedded in the two upper positioning grooves, and lower ends of the two sides of the bracket are respectively embedded in the two lower positioning grooves.

Further, the pump body is fixedly connected to the bracket by bolts, and the motor is fixedly connected to the bracket by bolts.

Further, the water slinging ring is made of an elastic material, and an inner hole of the water slinging ring is in interference fit with the output shaft of the motor.

As described above, the water pump structure of the sand filter involved in the present invention has the following beneficial effects.

During the operation of the sand filter, the output shaft of the motor rotates to drive the pump body to operate, and the water slinging ring also rotates synchronously with the output shaft of the motor. If water leaks from the pump body and flows toward the motor along the output shaft of the motor, the water slinging ring will block a flow of the leaked water, and the rotating water slinging ring will fling the water on the output shaft radially onto side walls of the water-retaining groove. In this way, the water-retaining groove is used to effectively prevent the flung water from splashing around. Then, the water slides down along the side walls of the water-retaining groove, and the water-retaining convex ring at the bottom of the water-retaining groove is able to effectively prevent the water above the output shaft from sliding down to the output shaft along the side walls of the water-retaining groove. This allows the water to slide down along an outer edge of the water-retaining convex ring and bypass the output shaft in the downward sliding process, thereby ensuring that the water leaking from the pump body and flowing toward the motor along the output shaft is fully blocked, which prevents the motor from being damaged due to water ingress or even causing safety accidents, and improves the operational stability and safety of the sand filter.

Another technical problem to be solved by the present invention is to provide a water pipeline filtration assembly that is able to simplify the overall structure of the sand pump, reduce the volume of the sand pump, and lower the costs of the sand pump.

To achieve the above purpose, the present invention provides a water pipeline filtration assembly. The water pipeline filtration assembly comprises a water introduction pipe extending in an up-and-down direction and a filtration pipe extending in the up-and-down direction. An end of the filtration pipe is fixedly connected to an end of the water introduction pipe, and a plurality of filtration holes are arranged on a side wall of the filtration pipe.

Further, the filtration holes are long holes extending in the up-and-down direction.

Further, the filtration pipe comprises a straight filtration pipe body and a reducing pipe body. The filtration holes are located on a side wall of the straight filtration pipe body. A pipe diameter of the straight filtration pipe body is greater than a pipe diameter of the water introduction pipe, and an end of the straight filtration pipe body is fixedly connected to the end of the water introduction pipe through the reducing pipe body.

Further, a water introduction pipe groove in a circle is arranged on a side wall of another end of the water introduction pipe, and a water introduction pipe sealing ring is embedded in the water introduction pipe groove.

Further, two side walls of the filtration pipe are each provided with multiple filtration holes.

Further, the water pipeline filtration assembly further comprises a built-in water pipe, and a side wall of the built-in water pipe is connected to a side wall of the water introduction pipe through a connecting piece.

Further, a reinforcing rib is arranged on the connecting piece.

Further, water pipe grooves are respectively arranged on outer side walls of two ends of the built-in water pipe, and water pipe sealing rings are embedded in the water pipe grooves.

Further, the connecting piece is in a sheet shape.

As described above, the water pipeline filtration assembly involved in the present invention has the following beneficial effects.

When the water pipeline filtration assembly is in use, another end of the water introduction pipe in the up-and-down direction can be communicated with a control valve of a sand pump, and the water pipeline filtration assembly is arranged in a filter cartridge. Filter media such as filter sand in the filter cartridge buries a periphery of the filtration pipe. After flowing through the filter sand, the water in the filter cartridge flows into the filtration pipe through the filtration holes on the side walls of the filtration pipe, and then flows into the control valve after flowing sequentially through the filtration pipe and the water introduction pipe in the up-and-down direction, and flows out to a designated location through the control valve. In this way, the water pipeline filtration assembly achieves the corresponding filtration and water diversion functions, and by arranging the filtration holes on the side walls of the filtration pipe extending in the up-and-down direction, a space in the up-and-down direction is fully utilized without occupying excessive spaces in left-right and front-back directions. Compared with the prior art in which sand pumps adopt the design of a plate mesh filter combined with a vertical water pipe, this water pipeline filtration assembly is used, so that the overall structure of the sand pump is simplified, and the volume of the sand pump is reduced, thereby simplifying the assembly process, and lowering the costs.

Another technical problem to be solved by the present invention is to provide a sand pump with a simple structure, small volume, easy assembly, and low costs.

To achieve the above purpose, the present invention provides a sand pump. The sand pump comprises a filter cartridge, a control valve installed on the filter cartridge, and a water pump for supplying water to the control valve. The water pipeline filtration assembly is arranged in the filter cartridge, and another end of the water introduction pipe is communicated with the control valve.

Further, the water pipeline filtration assembly further comprises a built-in water pipe, and a side wall of the built-in water pipe is fixedly connected to a side wall of the water introduction pipe through a connecting piece. The water pump is communicated with the control valve through the built-in water pipe.

As described above, the sand pump involved in the present invention has the following beneficial effects.

Before the sand pump operates, filter media such as filter sand can be filled in the periphery of the filtration pipe first. When water needs to be filtered, the water pump operates and supplies water to the control valve. The water flows into the filter cartridge through the control valve, and flows through the filter sand and then enters the filtration pipe through the filtration holes on the side walls of the filtration pipe, and then flows into the control valve after flowing sequentially through the filtration pipe and the water introduction pipe in the up-and-down direction. Under a control of the control valve, the water flows out to a designated location, thereby completing the water filtration. Moreover, based on this water pipeline filtration assembly, compared with the prior art in which sand pumps adopt the design of a plate mesh filter combined with a vertical water pipe, the sand pump has a simplified overall structure, easier assembly process, lower manufacturing cost, smaller overall volume, and more compact structural layout.

Another technical problem to be solved by the present invention is to provide a multi-way control valve with a simple structure, low assembly difficulty, low manufacturing costs, and small volume.

To achieve the above purpose, the present invention provides a multi-way control valve. The multi-way control valve comprises a valve body and a valve core. A valve core installation hole is arranged in a middle of the valve body, and a plurality of valve chambers are arranged in the valve body. All the valve chambers are distributed around a periphery of the valve core installation hole, and an inner cavity wall of each of all the valve chambers is provided with a valve core communication hole that is communicated with the valve core installation hole. At least one of the valve chambers is a drainage chamber, with a drainage hole on another cavity wall of the drainage chamber. At least one of the valve chambers is a filtration chamber, with a filtration hole on another cavity wall of the filtration chamber. At least one of the valve chambers is a backwashing chamber, with a backwashing hole on another cavity wall of the backwashing chamber. The valve core is embedded in the valve core installation hole, and a side wall of the valve core is in contact with a hole wall of the valve core installation hole. A valve core water inlet hole is arranged in a middle of the valve core, and a valve core water outlet hole that is communicated with the valve core water inlet hole is arranged on a side wall of the valve core. The valve core water outlet hole is communicated with a valve core communication hole of one of the valve chambers. A notched groove is arranged on another side wall of the valve core, and valve core communication holes of at least two another valve chambers are communicated through the notched groove.

Further, two drainage chambers exist, and are respectively located on two sides of the valve core. The filtration chamber and the backwashing chamber are respectively located on two sides of the valve core. One of the drainage chambers is a waste water drainage chamber, and a drainage hole arranged on a cavity wall of the waste water drainage chamber is a waste water drainage hole. Another of the drainage chambers is a circulating water drainage chamber, and a drainage hole arranged on a cavity wall of the circulating water drainage chamber is a circulating water drainage hole.

Further, at least one of the valve chambers is a sand washing chamber, with a sand washing hole on another cavity wall of the sand washing chamber. The sand washing chamber is located between the filtration chamber and the circulating water drainage chamber.

Further, at least one of the valve chambers is a closed chamber, and other cavity walls of the closed chamber are all closed.

Further, the filtration hole is arranged on a bottom cavity wall of the filtration chamber, the backwashing hole is arranged on a bottom cavity wall of the backwashing chamber, and the drainage hole is arranged on an outer cavity wall of the drainage chamber.

Further, two sealing strips are installed on the side wall of the valve core, and are respectively located on two sides of the valve core water outlet hole. The sealing strips are in contact with the hole wall of the valve core installation hole.

Further, an upper sealing ring is installed on a top of the valve core, and a lower sealing ring is installed on a bottom of the valve core. The upper sealing ring and the lower sealing ring are both in contact with the side wall of the valve core installation hole, and are respectively fixed to two ends of each of the sealing strips. The two sealing strips, the upper sealing ring, and the lower sealing ring form an integrated sealing member.

Further, an end of the valve core is connected to a knob, and an elastic column is installed on the knob. A plurality of gear grooves that are spaced sequentially in a circumferential direction are arranged on a surface of the valve body, and the elastic column is embedded in one of the gear grooves.

Further, the valve body comprises a valve main body and a valve cover detachably connected to the valve main body. All the valve chambers are formed between the valve main body and the valve cover.

Further, a plurality of spaced filtration bars are arranged in the filtration hole.

As described above, the multi-way control valve involved in the present invention has the following beneficial effects.

When the multi-way control valve is in use, the valve core water inlet hole can be communicated with a water supply device such as a water pump. The entire multi-way control valve is installed on a filter cartridge containing filter sand, a filter, and a filter cartridge pipeline. The backwashing hole is communicated with the filter cartridge pipeline. For filtering water supplied from a water pump, the valve core is rotated to a state in which the valve core water outlet hole corresponds to the filtration chamber. In this case, the valve core water outlet hole is communicated with the valve core communication hole, the notched groove corresponds to the backwashing chamber and the drainage chamber, and the valve core communication holes of the drainage chamber and the backwashing chamber are communicated through the notched groove. In this way, the water supplied from the water pump enters the valve core through the valve core water inlet hole, flows into the filtration chamber through the valve core water outlet hole and into the filter cartridge through the filtration hole, and then flows through the filter sand and other filter components to enter the filter cartridge pipeline. In this process, the filter sand and other components filter the water. The filtered water flows into the backwashing chamber through the filter pipeline and the backwashing hole and then into the drainage chamber through the notched groove, and finally flows out to a designated area through the drainage hole, thereby realizing the water filtration. For backwashing the filter cartridge, the valve core is rotated to a position in which the valve core water outlet hole corresponds to the backwashing chamber. In this case, the valve core water outlet hole is communicated with the valve core communication hole of the backwashing chamber, the notched groove corresponds to the filtration chamber and the drainage chamber, and the drainage chamber is communicated with the filtration chamber through the notched groove. In this way, the water supplied from the water pump similarly flows into the valve core through the valve core water inlet hole, flows into the backwashing chamber through the valve core water outlet hole, then flows back into the filter cartridge through the backwashing hole and the filter cartridge pipeline, flows into the filtration chamber through the filtration hole after flowing sequentially through the filter member and filter sand, then into the drainage chamber through the notched groove, and finally flows out through the drainage hole. In this process, impurities in the filter cartridge are discharged with the water flow through the filtration chamber and the drainage chamber, thereby realizing the backwashing of the filter cartridge and meeting needs such as backwashing. In addition, if needed, the valve core is directly rotated to a position in which the valve core water outlet hole corresponds to the drainage chamber. In this case, the valve core water outlet hole is communicated with the valve core communication hole of the drainage chamber. The water supplied from the water pump enters the drainage chamber through the valve core water inlet hole and the valve core water outlet hole, and is directly discharged through the drainage hole, thereby realizing direct drainage and meeting needs such as direct waste water discharge. This multi-way control valve meets the regulation requirements of waste water discharge, filtration, backwashing, etc. Moreover, by embedding the valve core in the middle of the valve body and arranging the valve chambers around the periphery of the valve core, the overall valve structure is more compact and smaller in size. More importantly, the entire valve structure is simplified, and the assembly is easy, thereby greatly reducing the manufacturing difficulty and the manufacturing costs, and improving the stability of the valve during use.

### BRIEF DESCRIPTION OF DRAWINGS

FIG. 1 is a schematic structural diagram of an assembly composed of a bracket, a pump body, and a motor installed on a base in Embodiment 1 of the present invention.
FIG. 2 is a schematic structural diagram of a base in Embodiment 1 of the present invention.
FIG. 3 is a schematic structural diagram of a filter cartridge in Embodiment 1 of the present invention.
FIG. 4 is a schematic structural diagram of a motor installed on a bracket in Embodiment 1 of the present invention.
FIG. 5 is a first perspective stereogram of a water pipeline filtration assembly in Embodiment 2 of the present invention.
FIG. 6 is another perspective stereogram of a water pipeline filtration assembly in Embodiment 2 of the present invention.
FIG. 7 is an assembly schematic diagram of a water pipeline filtration assembly and a control valve in Embodiment 2 of the present invention.
FIG. 8 is a schematic diagram showing a process of filtering water by a sand pump in Embodiment 2 of the present invention, where the arrows in the figure indicate a direction of water flow.
FIG. 9 is a schematic diagram showing a process of backwashing a filter sand in a filter cartridge by a sand pump in Embodiment 2 of the present invention, where the arrows in the figure indicate a direction of water flow.
FIG. 10 is an exploded schematic diagram of a multi-way control valve in Embodiment 3 of the present invention.
FIG. 11 is a schematic stereogram of a multi-way control valve in Embodiment 3 of the present invention.
FIG. 12 is a schematic structural diagram of a multi-way control valve with a valve cover and a knob removed in Embodiment 3 of the present invention.
FIG. 13 is a perspective stereogram of a valve core in Embodiment 3 of the present invention.
FIG. 14 is another perspective stereogram of a valve core in Embodiment 3 of the present invention.
FIG. 15 is another perspective stereogram of a valve core in Embodiment 3 of the present invention.
FIG. 16 is a schematic structural diagram of a sealing member in Embodiment 3 of the present invention.
FIG. 17 is a schematic diagram showing a flow of water among a swimming pool, a water pump, a filter cartridge, and a valve body when a water outlet hole of a valve core is adjusted to correspond to a filtration chamber in Embodiment 3 of the present invention, where the arrows in the figure indicate a direction of water flow.
FIG. 18 is a schematic diagram showing a flow of water among a swimming pool, a water pump, a filter cartridge, and a valve body when a water outlet hole of a valve core is adjusted to correspond to a backwashing chamber in Embodiment 3 of the present invention, where the arrows in the figure indicate a direction of water flow.

**Reference numerals of components:**

| | | | |
|---|---|---|---|
| 1 | bracket | 3 | motor |
| 11 | water-retaining groove | 31 | output shaft |
| 12 | water-retaining convex ring | 311 | positioning groove |
| 121 | semicircular convex ring | 4 | filter cartridge |
| 122 | inner circular convex ring | 41 | upper installation groove |
| 2 | pump body | 411 | upper positioning groove |
| 21 | front housing | 5 | base |
| 22 | rear housing | 51 | lower installation groove |
| 23 | water inlet pipe | 511 | lower positioning groove |
| 24 | water outlet pipe | | |
| 1' | water introduction pipe | 33' | waste water outlet |
| 11' | water introduction pipe groove | 34' | water flow meter |
| 2' | filtration pipe | 4' | filter cartridge |
| 21' | filtration hole | 5' | water pump |
| 22' | straight filtration pipe body | 6' | built-in water pipe |
| 23' | reducing pipe body | 61' | water pipe groove |
| 3' | control valve | 7' | connecting piece |
| 32' | clean water outlet | 71' | reinforcing rib |
| 8' | adapter pipe | | |
| 1" | valve body | 341" | circulating water drainage hole |
| 11" | valve main body | 35" | backwashing chamber |
| 12" | valve cover | 351" | backwashing hole |
| 2" | valve core | 36" | closed chamber |
| 21" | valve core water inlet hole | 4" | sealing member |
| 22" | valve core water outlet hole | 41" | sealing strip |
| 23" | notched groove | 42" | upper sealing ring |
| 31" | waste water drainage chamber | 43" | lower sealing ring |
| 311" | waste water drainage hole | 5" | knob |
| 32" | filtration chamber | 51" | elastic column |
| 321" | filtration hole | 52" | hand-twisted part |
| 33" | sand washing chamber | 6" | filter cartridge |
| 331 | sand washing hole | 7" | water pump |
| 34" | circulating water drainage chamber | 8" | swimming pool |

### DETAILED DESCRIPTION OF EMBODIMENTS

The implementations of the present invention will be described below through specific embodiments. Persons familiar with this technology can easily understand other advantages and effects of the present invention from the contents disclosed in this description.

It should be noted that the structures, proportions, sizes, etc., depicted in the drawings of the description are only used to match the contents disclosed in the description for the understanding and reading of persons familiar with this technology, and are not used to limit the implementation conditions of the present invention and thus have no substantial technical significance. Any modification of a structure, change of a proportional relationship, or adjustment of a size shall fall within the scope covered by the technical contents disclosed in the present invention without affecting the effects and the intended purposes of the present invention. Moreover, the terms such as "upper", "lower", "left", "right", "middle", and "a/an" cited in this description are only for the convenience of clear description and not used to limit the implementable scope of the present invention. Changes or adjustments to their relative relationships shall also be regarded as the implementable scope of the present invention without substantially changing the technical contents.

### Embodiment 1

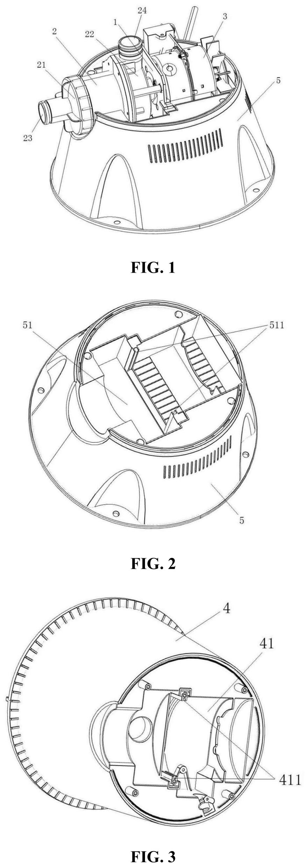

As shown in FIGS. 1 to 4, this embodiment provides a water pump structure of a sand filter. The water pump structure includes a bracket 1, a pump body 2 installed on the bracket 1, and a motor 3 installed on the bracket 1. An output shaft 31 of the motor 3 passes through a shaft hole of the bracket 1 to be connected to the pump body 2, and a water slinging ring is installed on the output shaft 31 of the motor 3. A water-retaining groove 11 is arranged on the bracket 1. The water slinging ring is located in the water-retaining groove 11, and the shaft hole is arranged at a bottom of the water-retaining groove 11. The bottom of the water-retaining groove 11 is further provided with water-retaining convex ring(s) 12 surrounding a periphery of the output shaft 31 of the motor 3. During the operation of the sand filter, the output shaft 31 of the motor 3 rotates to drive the pump body 2 to operate, and the water slinging ring also rotates synchronously with the output shaft 31 of the motor 3. If water leaks from the pump body 2 and flows toward the motor 3 along the output shaft 31 of the motor 3, the water slinging ring will block a flow of the leaked water, and the rotating water slinging ring will fling the water on the output shaft 31 radially onto side walls of the water-retaining groove 11. In this way, the water-retaining groove 11 is used to effectively prevent the flung water from splashing around. Then, the water slides down along the side walls of the water-retaining groove 11, and the water-retaining convex ring 12 at the bottom of the water-retaining groove 11 is able to effectively prevent the water above the output shaft 31 from sliding down to the output shaft 31 along the side walls of the water-retaining groove 11. This allows the water to slide down along an outer edge of the water-retaining convex ring 12 and bypass the output shaft 31 in the downward sliding process, thereby ensuring that the water leaking from the pump body 2 and flowing toward the motor 3 along the output shaft 31 is fully blocked, which prevents the motor 3 from being damaged due to water ingress or even causing safety accidents, and improves the operational stability and safety of the sand filter.

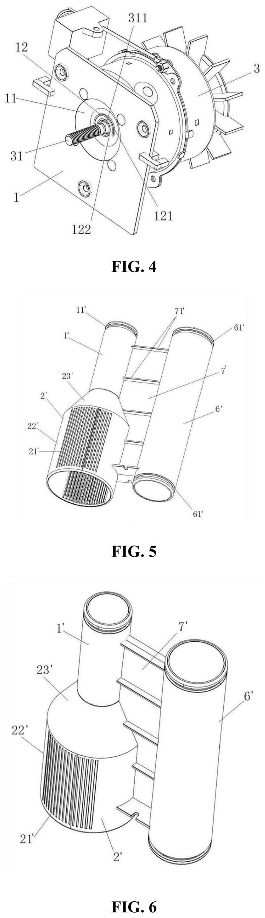

As shown in FIG. 4, there are two water-retaining convex rings 12 in this embodiment. One of the water-retaining convex rings 12 is a semicircular convex ring 121, which surrounds a periphery of an upper half of the shaft hole. The semicircular convex ring 121 mainly prevents the water above the output shaft 31 from falling back to the output shaft 31 when flowing downward along the side walls of the water-retaining groove 11, thereby simplifying the structure while meeting the water-retaining requirement. Another water-retaining convex ring 12 is an inner circular convex ring 122. The semicircular convex ring 121 is located outside the inner circular convex ring 122. The two water-retaining convex rings 12 effectively enhance the blocking effect on the water falling back along the side walls of the water-retaining groove 11.

As shown in FIG. 1, the pump body 2 and the motor 3 in this embodiment are respectively located on two sides of the bracket 1, and an opening of the water-retaining groove 11 faces the pump body 2. Moreover, sections of the side walls of the water-retaining groove 11 have an inclined structure. The water flung upward from the output shaft 31 to an upper side wall of the water-retaining groove 11 will smoothly converge to the bottom of the water-retaining groove 11 under the guidance of the side walls designed to be inclined, and then, will smoothly bypass the output shaft 31 and converge to a lower side wall of the water-retaining groove 11 under the blocking and guiding effect of the water-retaining convex rings 12, and will finally flow out smoothly downward under the guidance of the lower side wall designed to be inclined. That is, the side walls of the water-retaining groove 11 adopt an inclined design to ensure that the water flung on the side walls converges smoothly along the side walls and the water-retaining convex rings 12, thereby preventing the water on the side walls from dripping directly onto the output shaft 31.

As shown in FIG. 4, a positioning groove 311 in a circle is arranged on the output shaft 31 of the motor 3 in this embodiment, and the water slinging ring is embedded in the positioning groove 311. The positioning groove 311 plays a positioning role for the water slinging ring to ensure that the water slinging ring is in a set position. Moreover, in this embodiment, the water slinging ring is made of an elastic material, and an inner hole of the water slinging ring is in interference fit with the output shaft 31 of the motor 3. That is, the water slinging ring is tightly sleeved on the output shaft 31 to realize the fixed installation of the water slinging ring on the output shaft 31. Specifically, the water slinging ring in this embodiment is made of rubber.

As shown in FIGS. 1 to 3, the pump body 2 is fixedly connected to the bracket 1 by bolts, and the motor 3 is fixedly connected to the bracket 1 by bolts. In this embodiment, the bracket 1, the pump body 2, and the motor 3 are all located in an installation cavity formed between a bottom of the filter cartridge 4 and the base 5. A lower installation groove 51 is arranged on the base 5, and the installation cavity includes a cavity in the lower installation groove 51. Lower positioning grooves 511 are respectively arranged on two side walls of the lower installation groove 51, and two sides of the bracket 1 are respectively embedded in the two lower positioning grooves 511. Moreover, an upper installation groove 41 is arranged at the bottom of the filter cartridge 4, and the installation cavity further includes a cavity in the upper installation groove 41. That is, the installation cavity is composed of the cavity of the upper installation groove 41 and the cavity of the lower installation groove 51. Upper positioning grooves 411 are respectively arranged on two side walls of the upper installation groove 41. Upper ends of the two sides of the bracket 1 are respectively embedded in the two upper positioning grooves 411, and lower ends of the two sides of the bracket 1 are respectively embedded in the two lower positioning grooves 511. In addition, connecting pieces are arranged on the two sides of the bracket 1 in this embodiment, and U-shaped holes are arranged on the connecting pieces. During the assembly process, the pump body 2 may first be fixed on a side wall of the bracket 1 by bolts, and the motor 3 is fixed on another side wall of the bracket 1 by bolts. Then, the assembly is embedded in the upper installation groove 41 of the filter cartridge 4, and the upper ends of the two sides of the bracket 1 are respectively embedded in the two upper positioning grooves 411 to ensure that a relative position between the assembly and the filter cartridge 4 accurately meets the set requirements. Then, bolts are passed through the U-shaped holes of the connecting pieces to be threadedly connected to threaded holes at the bottom of the filter cartridge 4, so as to fix the assembly at the bottom of the filter cartridge 4. Then, the filter cartridge 4 and the assembly are placed on the base 5, and the lower ends of the two sides of the bracket 1 are respectively embedded in the two lower positioning grooves 511, until the filter cartridge 4 and the assembly are properly positioned. In this embodiment, the cooperation between the upper positioning grooves 411 and the two sides of the bracket 1, and the cooperation between the two sides of the bracket 1 and the lower positioning grooves 511 ensure that a relative positional relationship among the bracket 1, the filter cartridge 4 and the base 5 accurately meets the set requirements, thereby ensuring that the bracket 1, the pump body 2 and the motor 3 are able to be smoothly placed in the installation cavity. Moreover, this design of the installation cavity for accommodating the assembly, formed by the upper installation groove 41 and the lower installation groove 51, makes the overall structure of the sand filter more compact and smaller in volume, facilitating the use of the sand filter in occasions with limited space. In addition, after the filter cartridge 4 and the assembly are properly positioned on the base 5, the base 5 and the filter cartridge 4 are fixedly connected by bolts to realize a detachable connection between the filter cartridge 4 and the base 5, which is convenient for disassembling and maintaining the sand filter when necessary.

In addition, as shown in FIG. 1, the motor 3 in this embodiment can be a conventional motor, a fan blade, etc. The pump body 2 includes a front housing 21 and a rear housing 22. A water inlet pipe 23 is protrudingly arranged on the front housing 21, and is used to be communicated with an external water source to be treated. A water outlet pipe 24 is arranged perpendicular to the water inlet pipe 23, and is protrudingly arranged on the rear housing 22. The water outlet pipe 24 penetrates the bottom of the filter cartridge 4 to be communicated with a water pipe in the filter cartridge 4, and an upper end of the water pipe is communicated with a valve cover.

### Embodiment 2

As shown in FIGS. 5 to 8, this embodiment provides a water pipeline filtration assembly. The water pipeline filtration assembly includes a water introduction pipe 1' extending in an up-and-down direction and a filtration pipe 2' extending in the up-and-down direction. An end of the filtration pipe 2' is fixedly connected to an end of the water introduction pipe 1', and a plurality of filtration holes 21' are arranged on side walls of the filtration pipe 2'. When the water pipeline filtration assembly is in use, another end of the water introduction pipe 1' in the up-and-down direction can be communicated with a control valve 3' of a sand pump, and the water pipeline filtration assembly is arranged in a filter cartridge 4'. Filter media such as filter sand in the filter cartridge 4' buries a periphery of the filtration pipe 2'. After flowing through the filter sand, the water in the filter cartridge 4' flows into the filtration pipe 2' through the filtration holes 21' on the side walls of the filtration pipe 2', and then flows into the control valve 3' after flowing sequentially through the filtration pipe 2' and the water introduction pipe 1' in the up-and-down direction, and flows out to a designated location through the control valve 3'. In this way, the water pipeline filtration assembly achieves the corresponding filtration and water diversion functions, and by arranging the filtration holes 21' on the side walls of the filtration pipe 2' extending in the up-and-down direction, a space in the up-and-down direction is fully utilized without occupying excessive spaces in left-right and front-back directions. Compared with the prior art in which sand pumps adopt the design of a plate mesh filter combined with a vertical water pipe, this water pipeline filtration assembly is used, so that the overall structure of the sand pump is simplified, and the volume of the sand pump is reduced, thereby simplifying the assembly process, and lowering the costs.

As shown in FIGS. 5 and 6, the filtration holes 21' on the filtration pipe 2' in this embodiment are long holes extending in the up-and-down direction. The plurality of filtration holes 21' are symmetrically arranged on front and rear side walls of the filtration pipe 2', and all the filtration holes 21' are parallel to each other. The structure design of long holes reduces water flow resistance while meeting the filtration requirements, thereby ensuring that the water flux meets the set requirements.

Specifically, as shown in FIGS. 5 and 6, the filtration pipe 2' in this embodiment includes a straight filtration pipe body 22' and a reducing pipe body 23'. The filtration holes 21' are located on side walls of the straight filtration pipe body 22' whose pipe diameter is greater than a pipe diameter of the water introduction pipe 1'. An end of the straight filtration pipe body 22' is fixedly connected to an end of the water introduction pipe 1' through the reducing pipe body 23'.

As shown in FIGS. 5 and 6, a water introduction pipe groove 11' in a circle is arranged on a side wall of the another end of the water introduction pipe 1', and a water introduction pipe sealing ring is embedded in the water introduction pipe groove 11'. This water introduction pipe sealing ring is able to effectively enhance the sealing performance of the connection between the water introduction pipe 1' and the control valve 3', thereby preventing water leakage at the connection.

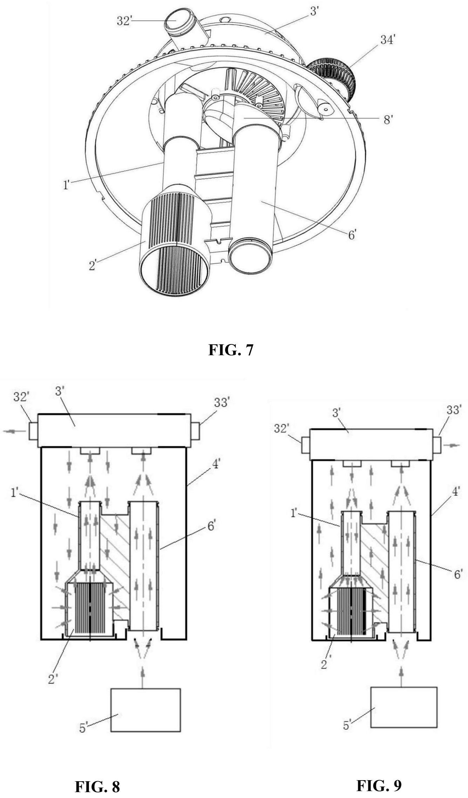

Moreover, as shown in FIGS. 7 to 9, this embodiment provides a sand pump. The sand pump includes the filter cartridge 4', the control valve 3' installed on the filter cartridge 4', and a water pump 5' for supplying water to the control valve 3'. The water pipeline filtration assembly is arranged in the filter cartridge 4', and the another end of the water introduction pipe 1' is communicated with the control valve 3'. Before the sand pump operates, filter media such as filter sand can be filled in the periphery of the filtration pipe 2' first. When water needs to be filtered, the water pump 5' operates and supplies water to the control valve 3'. The water flows into the filter cartridge 4' through the control valve 3', and flows through the filter sand and then enters the filtration pipe 2' through the filtration holes 21' on the side walls of the filtration pipe 2', and then flows into the control valve 3' after flowing sequentially through the filtration pipe 2' and the water introduction pipe 1' in the up-and-down direction. Under a control of the control valve 3', the water flows out to a designated location, thereby completing the water filtration. Moreover, based on this water pipeline filtration assembly, compared with the prior art in which sand pumps adopt the design of a plate mesh filter combined with a vertical water pipe, the sand pump has a simplified overall structure, easier assembly process, lower manufacturing cost, smaller overall volume, and more compact structural layout.

In addition, as shown in FIGS. 5 to 8, the water pipeline filtration assembly in this embodiment further includes a built-in water pipe 6'. A left side wall of the built-in water pipe 6' is fixedly connected to a right side wall of the water introduction pipe 1' through a connecting piece 7'. The connecting piece 7' in this embodiment is specifically in a sheet shape. In other embodiments, the connecting piece 7' may also adopt other structural designs. Moreover, in other embodiments, the built-in water pipe 6' is detachably or movably connected to the water introduction pipe 1' through a connecting piece 7' of other structures. Moreover, the water pump 5' is communicated with the control valve 3' through this built-in water pipe 6'. That is, the pipeline for communicating the water pump 5' with the control valve 3' is arranged inside the filter cartridge 4' in this embodiment. This built-in design not only makes the overall appearance of the sand pump more tidy and beautiful but also, more importantly, avoids the problem of poor operational stability of the water pump 5' due to the fact that external hoses are easily pulled off during use. Moreover, the built-in water pipe 6' reduces the space occupied by the sand pump during use.

As shown in FIGS. 5 and 6, the connecting piece 7' in this embodiment is provided with a plurality of reinforcing ribs 71'. The reinforcing ribs 71' are used to effectively enhance the strength of the connecting piece 7' itself, thereby enhancing the connection strength between the built-in water pipe 6' and the water introduction pipe 1'. In addition, the water introduction pipe 1' and the filtration pipe 2' in this embodiment form a reducing pipe body whose length is the same as that of the built-in water pipe 6'. A lower end of the connecting piece 7' is also fixedly connected to a right side wall of the filtration pipe 2'. The water pipeline filtration assembly in this embodiment has an integrated structure, and can be manufactured through an integral molding process.

As shown in FIGS. 5 and 6, water pipe grooves 61' are respectively arranged on outer side walls of two ends of the built-in water pipe 6', and water pipe sealing rings are embedded in the water pipe grooves 61'. The water pipe sealing rings disposed on the two ends of the built-in water pipe 6' are able to effectively enhance the sealing performances of the connection between the built-in water pipe 6' and the water pump 5', and the connection between the built-in water pipe 6' and the control valve 3', thereby avoiding the water leakage.

The filter cartridge 4' in this embodiment has a hollow cylindrical structure, and a positioning groove is arranged at a bottom of the filter cartridge 4'. A lower end of the filtration pipe 2' is embedded in the positioning groove, and forms an interference fit with a side wall of the positioning groove. In this way, during filtration, all water in the filter cartridge 4' enters the filtration pipe 2' from the side walls through the filtration holes 21'. A top of the filter cartridge 4' has an open structure, and the control valve 3' is installed on the top of the filter cartridge 4'. The control valve 3' is fixed to the top of the filter cartridge 4' by a fastening ring. The water pump 5' is installed on a base, and the base is located below the filter cartridge 4' and fixedly connected to the filter cartridge 4'. Moreover, an annular groove is arranged at the bottom of the filter cartridge 4', and a lower end of the built-in water pipe 6' is embedded in the annular groove. A through-hole is arranged in the middle of the annular groove, and a water outlet pipe of the water pump 5' is inserted into the through-hole and forms a sealed connection with a side wall of the through-hole. A water inlet pipe of the water pump 5' can be communicated with a swimming pool. When the water pump 5' operates, it is able to draw water from the swimming pool into the built-in water pipe 6', and then the water enters the control valve 3' through the built-in water pipe 6'. After being filtered by the filter cartridge 4', the water flows back to the control valve 3' through the filtration pipe 2' and the water introduction pipe 1', and finally flows back to the swimming pool through a water outlet of the control valve 3', thereby realizing the filtration of the water in the swimming pool.

In addition, the control valve 3' in this embodiment is provided with a valve handle, a waterway switching mechanism is arranged inside the control valve 3', and the valve handle is connected to the waterway switching mechanism. A clean water outlet 32' and a waste water outlet 33' are respectively arranged on two symmetrical side walls of the control valve 3'. A water flow meter 34' is further arranged on a side of the control valve 3' for detecting the water flow rate. A water inlet is arranged at a center of the control valve 3', and an adapter pipe 8' with a bent structure is installed at this water inlet. Another end of the adapter pipe 8' is detachably sleeved on the outside of an upper end of the built-in water pipe 6', thereby realizing communication between the built-in water pipe 6' and the center of the control valve 3'. In this embodiment, the filtration pipe 2' and the water introduction pipe 1' are arranged coaxially.

When the sand pump in this embodiment is in operation, in a case where the control valve 3' is adjusted to a filtration gear, the water in the swimming pool enters through the water inlet of the water pump 5', and flows out from the water outlet of the water pump 5' into the built-in water pipe 6', the adapter pipe 8', and the water inlet at the center of the control valve 3' sequentially, and then into the filter cartridge 4' in which the filter media is placed through the control valve 3'. After being filtered by the media and entering the filtration pipe 2', the water flows out from the clean water outlet 32' of the control valve 3' through the water introduction pipe 1', i.e., the water purification function is completed. When the control valve 3' is switched to a backwashing gear, the water in the swimming pool enters through the water inlet of the water pump 5', and flows out from the water outlet of the water pump 5' into the built-in water pipe 6', the adapter pipe 8', and the water inlet at the center of the control valve 3' sequentially, and then into the water introduction pipe 1' through the waterway inside the control valve 3', and flows through the filtration pipe 2' into the filter cartridge 4' in which the filter media is placed. Then, impurities floating on a surface of the filter media are discharged with the water flow through a sewage outlet of the control valve 3', thereby achieving the backwashing effect.

The sand pump in this embodiment is an integrated sand pump, which can be used for filtering the water in the swimming pool. This embodiment solves the problems of filter pumps in the prior art, such as external water pipes, numerous components and parts, large volume, high costs, cumbersome user assembly, and potential water leakage risks. Specifically, in the sand pump in this embodiment, by embedding the water pipes and integrating the water pipes with the filtration pipe 2', the number of components and parts is reduced, the costs are lowered, and the service efficiency is improved, so that users do not need to perform redundant assembly operations on the water pipes and the filtration pipe 2' during use, thereby making the process more convenient, eliminating the assembly step of external hoses, and avoiding potential water leakage caused by improper user installation. On the premise of achieving the same required functions, the sand pump in this embodiment has fewer components and parts, which not only optimizes the assembly steps but also reduces the costs of production, assembly, and packaging, while improving the product quality. Moreover, the overall appearance of the sand pump in this embodiment is simpler and more elegant.

### Embodiment 3

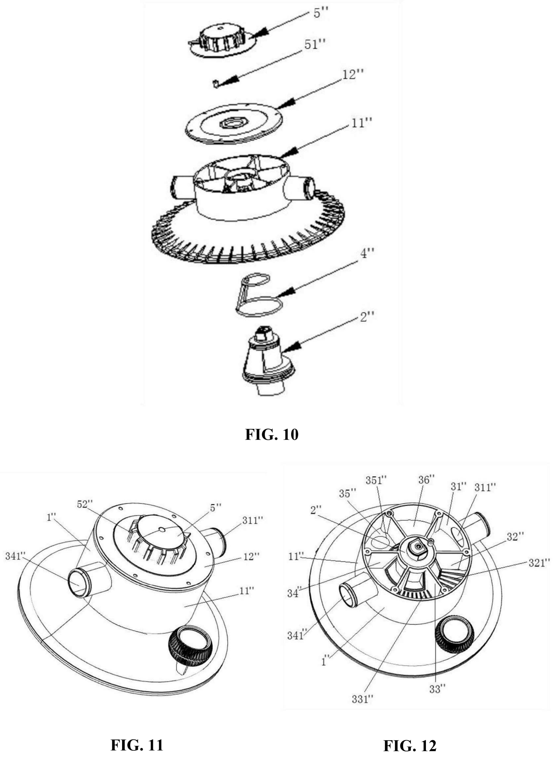

As shown in FIGS. 10 to 18, this embodiment provides a multi-way control valve. The multi-way control valve includes a valve body 1" and a valve core 2". A valve core installation hole is arranged in the middle of the valve body 1", and a plurality of valve chambers are arranged in the valve body 1". All the valve chambers are distributed around a periphery of the valve core installation hole, and an inner cavity wall of each of all the valve chambers is provided with a valve core communication hole that is communicated with the valve core installation hole. One of the valve chambers is a drainage chamber, with a drainage hole on its another cavity wall. One of the valve chambers is a filtration chamber 32", with a filtration hole 321" on its another cavity wall. One of the valve chambers is a backwashing chamber 35", with a backwashing hole 351" on its another cavity wall. The valve core 2" is embedded in the valve core installation hole, and side walls of the valve core 2" are in contact with hole walls of the valve core installation hole. A valve core water inlet hole 21" is arranged in the middle of the valve core 2", and a valve core water outlet hole 22" that is communicated with the valve core water inlet hole 21" is arranged on a side wall of the valve core 2". The valve core water outlet hole 22" is communicated with a valve core communication hole of one of the valve chambers. A notched groove 23" is arranged on another side wall of the valve core 2", and the valve core communication holes of at least two another valve chambers are communicated through the notched groove 23". When the multi-way control valve is in use, the valve core water inlet hole 21" can be communicated with a water supply device such as a water pump. The entire multi-way control valve is installed on a filter cartridge containing filter sand, a filter, and a filter cartridge pipeline. The backwashing hole 351" is communicated with the filter cartridge pipeline. When filtering water supplied from a water pump, the valve core 2" is rotated to a state in which the valve core water outlet hole 22" corresponds to the filtration chamber 32". In this case, the valve core water outlet hole 22" is communicated with the valve core communication hole, the notched groove 23" corresponds to the backwashing chamber 35" and the drainage chamber, and the valve core communication holes of the drainage chamber and the backwashing chamber 35" are communicated through the notched groove 23". In this way, the water supplied from the water pump enters the valve core 2" through the valve core water inlet hole 21", flows into the filtration chamber 32" through the valve core water outlet hole 22" and into the filter cartridge through the filtration hole 321", and then flows through the filter sand and other filter components to enter the filter cartridge pipeline. In this process, the filter sand and other components will filter the water. The filtered water flows into the backwashing chamber 35" through the filter pipeline and the backwashing hole 351" and then into the drainage chamber through the notched groove 23", and finally flows out to a designated area through the drainage hole, thereby realizing the water filtration. When backwashing the filter cartridge, the valve core 2" is rotated to a position in which the valve core water outlet hole 22" corresponds to the backwashing chamber 35". In this case, the valve core water outlet hole 22" is communicated with the valve core communication hole of the backwashing chamber 35", the notched groove 23" corresponds to the filtration chamber 32" and the drainage chamber, and the drainage chamber is communicated with the filtration chamber 32" through the notched groove 23". In this way, the water supplied from the water pump similarly flows into the valve core 2" through the valve core water inlet hole 21", flows into the backwashing chamber 35" through the valve core water outlet hole 22", then flows back into the filter cartridge through the backwashing hole 351" and the filter cartridge pipeline, flows into the filtration chamber 32" through the filtration hole 321" after flowing sequentially through the filter member and filter sand, then into the drainage chamber through the notched groove 23", and finally flows out through the drainage hole. In this process, impurities in the filter cartridge are discharged with the water flow through the filtration chamber 32" and the drainage chamber, thereby realizing the backwashing of the filter cartridge and meeting needs such as backwashing. In addition, if needed, the valve core 2" is directly rotated to a position in which the valve core water outlet hole 22" corresponds to the drainage chamber. In this case, the valve core water outlet hole 22" is communicated with the valve core communication hole of the drainage chamber. The water supplied from the water pump enters the drainage chamber through the valve core water inlet hole 21" and the valve core water outlet hole 22", and is directly discharged through the drainage hole, thereby realizing direct drainage and meeting needs such as direct waste water discharge. This multi-way control valve meets the regulation requirements of waste water discharge, filtration, backwashing, etc. Moreover, by embedding the valve core 2" in the middle of the valve body 1" and arranging the valve chambers around the periphery of the valve core 2", the overall valve structure is more compact and smaller in size. More importantly, the valve structure is simplified, and the assembly is easy, thereby greatly reducing the manufacturing difficulty and the manufacturing costs, and improving the stability of the valve during use.

As shown in FIG. 12, there are two drainage chambers in this embodiment. The two drainage chambers are respectively located on two sides of the valve core 2". The filtration chamber 32" and the backwashing chamber 35" are respectively located on two sides of the valve core 2". One of the drainage chambers is a waste water drainage chamber 31", and a drainage hole arranged on a cavity wall of the waste water drainage chamber 31" is a waste water drainage hole 311". Another of the drainage chambers is a circulating water drainage chamber 34", and a drainage hole arranged on a cavity wall of the circulating water drainage chamber 34" is a circulating water drainage hole 341". When the valve core 2" is rotated to correspond to the filtration chamber 32", the water filtered by the filter cartridge is finally discharged through the circulating water drainage chamber 34" and the circulating water drainage hole 341". When the valve core 2" is rotated to correspond to the backwashing chamber 35", the backwashing water is finally discharged through the waste water drainage chamber 31" and the waste water drainage hole 311". In this embodiment, the circulating water drainage hole 341" and the waste water drainage hole 311" are arranged coaxially but with opposite drainage directions. In other embodiments, only one drainage chamber can be provided, and in this embodiment, when the valve core water outlet hole 22" is adjusted to correspond to the filtration chamber 32", or when the valve core water outlet hole 22" is adjusted to correspond to the backwashing chamber 35", the water is finally discharged through this single drainage chamber and its drainage hole.

As shown in FIG. 12, in this embodiment, one of the valve chambers in the valve body 1" is a sand washing chamber 33", with a sand washing hole 331" on its another cavity wall. The sand washing chamber 33" is located between the filtration chamber 32" and the circulating water drainage chamber 34". Moreover, there is a valve chamber that is a closed chamber 36", and other cavity walls of the closed chamber 36" are all closed. The closed chamber 36" is located between the waste water drainage chamber 31" and the backwashing chamber 35". That is, the valve body 1" in this embodiment has 6 valve chambers in total, all of the same size. Specifically, the 6 valve chambers are formed by arranging a plurality of spaced plates evenly spaced in a circumferential direction inside the valve body 1". When the valve core water outlet hole 22" is rotated to correspond to any valve chamber, the notched groove 23" corresponds to another 3 valve chambers, and the 3 valve chambers are communicated through the notched groove 23". When the valve core 2" is rotated to make the valve core water outlet hole 22" correspond to the sand washing chamber 33", the backwashing chamber 35", the closed chamber 36", and the waste water drainage chamber 31" are communicated through the notched groove 23". The water supplied from the water pump flows into the sand washing chamber 33" through the valve core 2", flows into the filter cartridge through the sand washing hole 331", then flows into the backwashing chamber 35" through the filter sand, the filter member, the filter cartridge pipeline, and the backwashing hole 351", then flows into the waste water drainage chamber 31" through the notched groove 23", and finally flows out through the waste water drainage hole 311", thereby realizing sand washing. When the valve core water outlet hole 22" is rotated to correspond to the closed chamber 36", since the other cavity walls of the closed chamber 36" are closed, the water flowing into the closed chamber 36" through the valve core 2" cannot flow further, thereby achieving the water flow shut-off effect.

Specifically, in this embodiment, the filtration hole 321" is arranged on a bottom cavity wall of the filtration chamber 32", the backwashing hole 351" is arranged on a bottom cavity wall of the backwashing chamber 35", and the drainage hole is arranged on an outer cavity wall of the drainage chamber. That is, the waste water drainage hole 311" is arranged on an outer side wall of the waste water drainage chamber 31", and the circulating water drainage hole 341" is arranged on an outer side wall of the circulating water drainage chamber 34". The sand washing hole 331" is also located at a bottom of the sand washing chamber 33". In this embodiment, a plurality of spaced filtration bars are arranged in the filtration hole 321", and a plurality of spaced filtration bars are also arranged in the sand washing hole 331", so that both the filtration hole 321" and the sand washing hole 331" have a certain filtering effect.

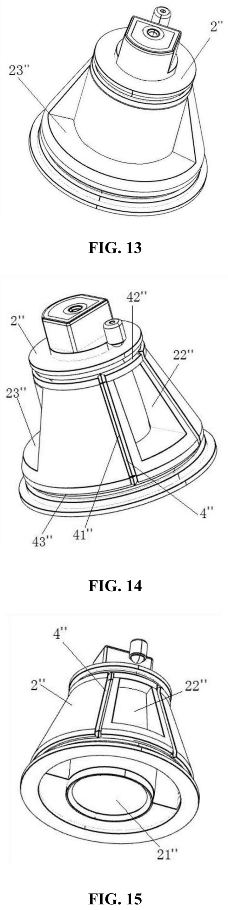

In addition, as shown in FIGS. 14 to 16, two sealing strips 41" are installed on the side walls of the valve core 2", and are respectively located on two sides of the valve core water outlet hole 22". The sealing strips 41" are in contact with the hole walls of the valve core installation hole. An upper sealing ring 42" is installed on a top of the valve core 2", and a lower sealing ring 43" is installed on a bottom of the valve core 2". The upper sealing ring 42" and the lower sealing ring 43" are both in contact with the side walls of the valve core installation hole, and are respectively fixed to two ends of the sealing strip 41". The two sealing strips 41", the upper sealing ring 42", and the lower sealing ring 43" form an integrated sealing member 4". The sealing member 4" enhances the sealing effect of a periphery of the outlet hole of the valve core 2", ensuring that the water flowing out of the valve core water outlet hole 22" directly flows into a corresponding valve chamber through the valve core communication hole without leaking elsewhere, thereby ensuring that the multi-way control valve is able to more accurately regulate water flow along a set path, so that the regulation precision of the multi-way control valve is higher.

As shown in FIGS. 10 and 11, the valve body 1" in this embodiment includes a valve main body 11" and a valve cover 12" detachably connected to the valve main body 11". All the valve chambers are formed between the valve main body 11" and the valve cover 12". In this way, the valve cover 12" can be removed from the valve main body 11" when needed, thereby opening the valve chambers for cleaning operations such as wiping on the valve chambers, and facilitating the cleaning of the interior of the valve body 1". Specifically, the valve cover 12" is fixed to the valve main body 11" by a plurality of screws.

Moreover, an end of the valve core 2" in this embodiment is connected to a knob 5", and an elastic column 51" is installed at a bottom of the knob 5". A plurality of gear grooves, which are spaced sequentially in the circumferential direction, are arranged on a surface of the valve body 1". Specifically, 6 gear grooves that are evenly spaced in the circumferential direction are arranged on an upper surface of the valve cover 12", and the 6 gear grooves respectively correspond to the 6 valve chambers. The elastic column 51" is embedded in one of the gear grooves. After rotating the valve core 2" to a set position, the elastic column 51" is embedded in a corresponding gear groove, and in this case, the valve core water outlet hole 22" accurately corresponds to a corresponding valve chamber. The cooperation between the elastic column 51" and the gear groove plays a positioning role, and provides a prompt to an operator that the rotation has reached a correct position during the rotation of the knob 5". The knob 5" includes an installation part and a hand-twisted part 52". The installation part is disk-shaped, and the valve cover 12" is provided with a corresponding groove that is matched with the installation part. The hand-twisted part 52" is an upwardly protruding cylinder, with a plurality of anti-slip strips on its outer side wall.

In this embodiment, the valve core installation hole is located at the center of the valve body 1", and an entirety of the valve core installation hole and the valve core 2" is conical in shape. The valve core 2" penetrates the valve body 1", and is fixedly connected to the knob 5". A closed waterway is formed between the valve core 2" and the valve body 1", and the sealing member 4" on the valve core 2" enhances the sealing performance of the waterway. The knob 5" and the valve core 2" are rotatably connected relative to the valve body 1" and the valve cover 12". By rotating the knob 5", six functions, i.e., filtration, backwashing, forward washing, circulation, drainage, and shut-off are realized.

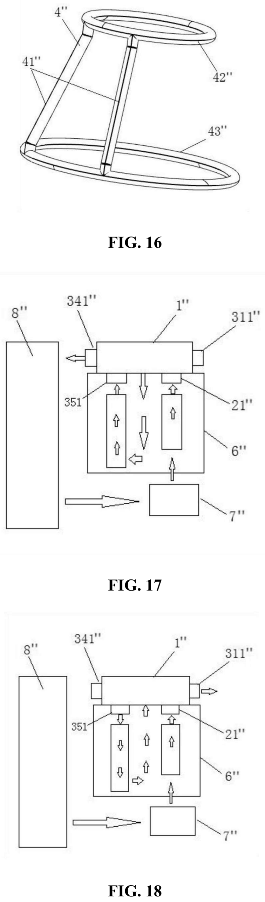

As shown in FIGS. 17 and 18, the multi-way control valve in this embodiment is used in conjunction with a filter cartridge 6" and a water pump 7" to form a sand pump. The sand pump can be used for filtering water in a swimming pool 8". The water pump 7" can be communicated with a drainage port of the swimming pool 8", and the circulating water drainage hole 341" can be communicated with a water inlet end of the swimming pool 8", thereby realizing circulating filtration of the water in the swimming pool and direct waste water discharge and other treatments for the water in the swimming pool 8". The specific processes are as follows.

When the valve core water outlet hole 22" is aligned with the waste water drainage chamber 31", water pumped from the swimming pool 8" enters the waste water drainage chamber 31" through the water pump 7", and is discharged through the waste water drainage hole 311".

As shown in FIG. 17, when the valve core water outlet hole 22" is aligned with the filtration chamber 32", water pumped from the swimming pool 8" enters the filtration chamber 32" through the water pump 7" and the valve core 2", then flows through the filter sand, the filter member, and the filter cartridge pipeline in the filter cartridge 6" into the backwashing chamber 35" and then into the circulating water drainage chamber 34" through the notched groove 23", and finally flows back to the swimming pool 8" through the circulating water drainage hole 341", thereby realizing circulating filtration of the water in the swimming pool.

When the valve core water outlet hole 22" is aligned with the sand washing chamber 33", water pumped from the swimming pool 8" enters the sand washing chamber 33" through the water pump 7" and the valve core 2", then flows into the filter cartridge 6" through the sand washing hole 331", flows sequentially through the filter sand, the filter, and the filter cartridge pipeline in the filter cartridge 6" into the backwashing chamber 35", enters the waste water drainage chamber 31" through the notched groove 23", and is discharged through the waste water drainage hole 311 ".

When the valve core water outlet hole 22" is aligned with the circulating water drainage chamber 34", water pumped from the bottom of the swimming pool 8" enters the circulating water drainage chamber 34" through the water pump 7" and the valve core 2", and flows into the swimming pool 8" through the circulating water drainage hole 341", thereby forming circulating flow of the water in the swimming pool.

As shown in FIG. 18, when the valve core water outlet hole 22" is aligned with the backwashing chamber 35", water pumped from the bottom of the swimming pool 8" enters the backwashing chamber 35" through the water pump 7" and the valve core 2", flows into the filter cartridge pipeline and the filter through the backwashing hole 351", and enters the filter cartridge 6". Impurities in the filter sand are washed into the filtration chamber 32" by the water flow, flow through the notched groove 23" into the waste water drainage chamber 31", and are finally discharged from the waste water drainage hole 311 ".

When the valve core water outlet hole 22" is aligned with the closed chamber 36", water pumped from the swimming pool 8" enters the closed chamber 36" through the valve core 2", and no circulating water channel is formed, i.e., this is a non-operating state.

In conclusion, the present invention effectively overcomes various shortcomings in the prior art, and has a high industrial application value.

The above embodiments are only illustrative of the principles and effects of the present invention, and are not intended to limit the present invention. Anyone familiar with this technology can modify or change the above embodiments without violating the spirit and scope of the present invention. Therefore, all equivalent modifications or changes made by those with ordinary knowledge in the technical field without departing from the spirit and technical ideas disclosed in the present invention shall still be covered by the claims of the present invention.

## Claims

1. A water pump structure of a sand filter, **characterized by** comprising a bracket, a pump body installed on the bracket, and a motor installed on the bracket, wherein an output shaft of the motor passes through a shaft hole of the bracket to be connected to the pump body, and a water slinging ring is installed on the output shaft of the motor; a water-retaining groove is arranged on the bracket, the water slinging ring is located in the water-retaining groove, and the shaft hole is arranged at a bottom of the water-retaining groove; and water-retaining convex ring(s) surrounding a periphery of the output shaft of the motor are further arranged at the bottom of the water-retaining groove.

2. The water pump structure of the sand filter according to claim 1, wherein at least one of the water-retaining convex ring(s) is a semicircular convex ring, and the semicircular convex ring surrounds a periphery of an upper half of the shaft hole.

3. The water pump structure of the sand filter according to claim 2, wherein two water-retaining convex rings exist, one of the two water-retaining convex rings is the semicircular convex ring, and another of the two water-retaining convex rings is an inner circular convex ring, wherein the semicircular convex ring is located outside the inner circular convex ring.

4. The water pump structure of the sand filter according to claim 1, wherein the pump body and the motor are respectively located on two sides of the bracket, and an opening of the water-retaining groove faces the pump body.

5. The water pump structure of the sand filter according to claim 1, wherein a positioning groove in a circle is arranged on the output shaft of the motor, and the water slinging ring is embedded in the positioning groove.

6. The water pump structure of the sand filter according to claim 1, wherein a section of a side wall of the water-retaining groove is of an inclined structure.

7. The water pump structure of the sand filter according to claim 1, wherein the bracket, the pump body, and the motor are all located in an installation cavity formed between a bottom of a filter cartridge and a base; a lower installation groove is arranged on the base, and the installation cavity comprises a cavity in the lower installation groove; lower positioning grooves are respectively arranged on two side walls of the lower installation groove; and two sides of the bracket are respectively embedded in the two lower positioning grooves.

8. The water pump structure of the sand filter according to claim 7, wherein an upper installation groove is arranged at the bottom of the filter cartridge, and the installation cavity further comprises a cavity in the upper installation groove; upper positioning grooves are respectively arranged on two side walls of the upper installation groove; upper ends of the two sides of the bracket are respectively embedded in the two upper positioning grooves; and lower ends of the two sides of the bracket are respectively embedded in the two lower positioning grooves.

9. The water pump structure of the sand filter according to claim 1, wherein the pump body is fixedly connected to the bracket by bolts, and the motor is fixedly connected to the bracket by bolts.

10. The water pump structure of the sand filter according to claim 1, wherein the water slinging ring is made of an elastic material, and an inner hole of the water slinging ring is in interference fit with the output shaft of the motor.

11. A water pipeline filtration assembly, **characterized by** comprising a water introduction pipe extending in an up-and-down direction and a filtration pipe extending in the up-and-down direction, wherein an end of the filtration pipe is fixedly connected to an end of the water introduction pipe, and a plurality of filtration holes are arranged on a side wall of the filtration pipe.

12. The water pipeline filtration assembly according to claim 11, wherein the filtration pipe comprises a straight filtration pipe body and a reducing pipe body; the filtration holes are located on a side wall of the straight filtration pipe body; a pipe diameter of the straight filtration pipe body is greater than a pipe diameter of the water introduction pipe; and an end of the straight filtration pipe body is fixedly connected to the end of the water introduction pipe through the reducing pipe body.

13. The water pipeline filtration assembly according to claim 11, wherein the filtration holes are long holes extending in the up-and-down direction.

14. The water pipeline filtration assembly according to any one of claims 11 to 13, wherein a water introduction pipe groove in a circle is arranged on a side wall of another end of the water introduction pipe, and a water introduction pipe sealing ring is embedded in the water introduction pipe groove.

15. The water pipeline filtration assembly according to claim 11, **characterized by** further comprising a built-in water pipe, and a side wall of the built-in water pipe is connected to a side wall of the water introduction pipe through a connecting piece.

16. The water pipeline filtration assembly according to claim 15, wherein a reinforcing rib is arranged on the connecting piece.

17. The water pipeline filtration assembly according to claim 15, wherein the connecting piece is in a sheet shape.

18. The water pipeline filtration assembly according to any one of claims 15 to 17, wherein water pipe grooves are respectively arranged on outer side walls of two ends of the built-in water pipe, and water pipe sealing rings are embedded in the water pipe grooves.

19. A sand pump, comprising a filter cartridge, a control valve installed on the filter cartridge, and a water pump for supplying water to the control valve, wherein the water pipeline filtration assembly according to claim 11 is arranged in the filter cartridge, and another end of the water introduction pipe is communicated with the control valve.

20. The sand pump according to claim 19, wherein the water pipeline filtration assembly further comprises a built-in water pipe, a side wall of the built-in water pipe is fixedly connected to a side wall of the water introduction pipe through a connecting piece, and the water pump is communicated with the control valve through the built-in water pipe.

21. A multi-way control valve, **characterized by** comprising a valve body and a valve core, wherein a valve core installation hole is arranged in a middle of the valve body, and a plurality of valve chambers are arranged in the valve body; all the valve chambers are distributed around a periphery of the valve core installation hole, and an inner cavity wall of each of all the valve chambers is provided with a valve core communication hole that is communicated with the valve core installation hole; at least one of the valve chambers is a drainage chamber, with a drainage hole on another cavity wall of the drainage chamber; at least one of the valve chambers is a filtration chamber, with a filtration hole on another cavity wall of the filtration chamber; and at least one of the valve chambers is a backwashing chamber, with a backwashing hole on another cavity wall of the backwashing chamber; the valve core is embedded in the valve core installation hole, and a side wall of the valve core is in contact with a hole wall of the valve core installation hole; a valve core water inlet hole is arranged in a middle of the valve core, and a valve core water outlet hole that is communicated with the valve core water inlet hole is arranged on a side wall of the valve core; the valve core water outlet hole is communicated with a valve core communication hole of one of the valve chambers; a notched groove is arranged on another side wall of the valve core, and valve core communication holes of at least two another valve chambers are communicated through the notched groove.

22. The multi-way control valve according to claim 21, wherein two drainage chambers exist, and are respectively located on two sides of the valve core; the filtration chamber and the backwashing chamber are respectively located on two sides of the valve core; one of the drainage chambers is a waste water drainage chamber, and a drainage hole arranged on a cavity wall of the waste water drainage chamber is a waste water drainage hole; another of the drainage chambers is a circulating water drainage chamber, and a drainage hole arranged on a cavity wall of the circulating water drainage chamber is a circulating water drainage hole.

23. The multi-way control valve according to claim 22, wherein at least one of the valve chambers is a sand washing chamber, with a sand washing hole on another cavity wall of the sand washing chamber; and the sand washing chamber is located between the filtration chamber and the circulating water drainage chamber.

24. The multi-way control valve according to claim 21, wherein at least one of the valve chambers is a closed chamber, and other cavity walls of the closed chamber are all closed.

25. The multi-way control valve according to claim 21, wherein the filtration hole is arranged on a bottom cavity wall of the filtration chamber, the backwashing hole is arranged on a bottom cavity wall of the backwashing chamber, and the drainage hole is arranged on an outer cavity wall of the drainage chamber.

26. The multi-way control valve according to claim 21, wherein two sealing strips are installed on the side wall of the valve core, and are respectively located on two sides of the valve core water outlet hole; and the sealing strips are in contact with the hole wall of the valve core installation hole.

27. The multi-way control valve according to claim 26, wherein an upper sealing ring is installed on a top of the valve core, and a lower sealing ring is installed on a bottom of the valve core; the upper sealing ring and the lower sealing ring are both in contact with the side wall of the valve core installation hole, and are respectively fixed to two ends of each of the sealing strips; the two sealing strips, the upper sealing ring, and the lower sealing ring form an integrated sealing member.

28. The multi-way control valve according to claim 21, wherein an end of the valve core is connected to a knob, and an elastic column is installed on the knob; a plurality of gear grooves that are spaced sequentially in a circumferential direction are arranged on a surface of the valve body, and the elastic column is embedded in one of the gear grooves.

29. The multi-way control valve according to claim 21, wherein the valve body comprises a valve main body and a valve cover detachably connected to the valve main body; all the valve chambers are formed between the valve main body and the valve cover.

30. The multi-way control valve according to claim 21, wherein a plurality of spaced filtration bars are arranged in the filtration hole.
